# EUROPÄISCHE PATENTSCHRIFT

(11) **EP 0 872 393 B1**
(45) Veröffentlichungstag und Bekanntmachung des Hinweises auf die Patenterteilung: **27.08.2003**
(21) Anmeldenummer: 98106794.5
(22) Anmeldetag: 15.04.1998
(51) Int. Cl.: B60T 8/00

(54) **Verfahren zur Bremsdruckregelung eines Kraftfahrzeuges**
Vehicle brake pressure controlling procedure
Procédé de réglage de la pression de freinage d'un véhicule

(30) Priorität: 16.04.1997 DE 19715846
(43) Veröffentlichungstag der Anmeldung: 21.10.1998
(73) Patentinhaber: Volkswagen Aktiengesellschaft, 38436 Wolfsburg (DE)
(72) Erfinder: Babbel Eckhard, Dipl.-Ing., 38100 Braunschweig (DE); Gimkiewicz, Klaus, Dr., 38524 Sassenburg (DE)

(56) Entgegenhaltungen:
- DE-A- 19 522 632
- DE-C- 19 510 104
- US-A- 4 844 557

## Beschreibung

Die Erfindung bezieht sich auf ein Verfahren zur Bremsdruckregelung an den Rädern zumindest einer Achse eines Kraftfahrzeuges, wobei die Raddrehzahlen von mindestens einer Sensorvorrichtung ermittelt und einer Auswerteeinheit zugeleitet werden, welche die Raddrehzahlen auswertet und aus den ausgewerteten Raddrehzahlen Stellsignale für Aktuatoren zur Einstellung des Radbremsdruckes an den einzelnen Rädern bildet, wobei in Abhängigkeit von den ermittelten und ausgewerteten Raddrehzahlen eine Verminderung des Bremsdruckes an mindestens einem kurveninneren Rad oder eine Erhöhung des Bremsdruckes an mindestens einem kurvenäußeren Rad bei Kurvenfahrt und gleichzeitiger Bremsbetätigung vorgenommen wird sowie eine Vorrichtung zur Durchführung des Verfahrens.

Aus der deutschen Patentschrift DE 195 10 104 C1 ist ein System zur Kurvenerkennung bekannt, bei dem die Kurvenerkennung durch Berechnung eines ersten, der Hinterachs-Querbeschleunigung proportionalen Ist-Wertes aus der Differenz der Raddrehzahlen der Hinterräder und eines zweiten, der Vorderachs-Querbeschleunigung proportionalen Ist-Wertes aus der Differenz der Raddrehzahlen der Vorderräder vorgenommen wird und daß die Kurvenerkennung statt findet, wenn der Betrag des ersten Ist-Wertes einen vorgegebenen ersten Schwellwert und der Betrag des zweiten Ist-Wertes einen vorgegebenen zweiten Schwellwert überschreitet.

Bei hohen Geschwindigkeiten und den dabei auftretenden großen Kurvenradien ist die Differenz der Raddrehzahlen jedoch sehr gering, so daß zum Erkennen auch dieser Kurvenfahrten die Schwellwerte entsprechend niedrig gewählt werden müssen. Unterschiedliche Fahrbahnreibwerte (µ-Split) auf linker und rechter Seite des Kraftfahrzeuges können beim Bremsen jedoch ebenfalls zu Drehzahldifferenzen führen und somit das Ergebnis verfälschen. Dadurch kann auch bei Geradeausfahrt von dem System eine Kurvenfahrt irrtümlich erkannt werden, was wiederum zum Schiefziehen der Bremse führt. Dies ist insbesondere bei Vorliegen von µ-Split oder glatter Fahrbahn verhängnisvoll, da in diesem Fall auf der Seite mit niedrigeren Reibwert der Bremsdruck reduziert wird und damit das Wegdrehen des Fahrzeuges unterstützt wird. Die Wahl von niedrigen Schwellwerten zum Erkennen von Kurven bei hohen Geschwindigkeiten und großen Kurvenradien ist im Sinne einer Vermeidung einer irrtümlichen Erkennung Kurvenfahrt bei Geradeausfahrt und Vorliegen von µ-Split nicht sinnvoll. Die Wahl der Schwellwerte stellt somit immer eine Kompromißlösung dar.

Aufgabe der Erfindung ist es, ein Bremsdruckregelung der eingangs genannten Art derart zu verbessern, daß eine Geradeausfahrt von einer Kurvenfahrt auch bei Vorliegen von unterschiedlichen Reibbeiwerten (µ-Split oder stellenweise glatter Fahrbahn) an den einzelnen Rädern sicher unterschieden werden kann, und eine Kurvenfahrt auch bei hohen Geschwindigkeiten und großen Kurvenradien erkannt werden kann.

Diese Aufgabe wird erfindungsgemäß durch die Merkmale der Ansprüche 1 und 3 gelöst. Vorteilhafte Aus- und Weiterbildungen sind in den Unteransprüchen gegeben.

Erfindungsgemäß wird vorgeschlagen eine Kurve zu erkennen, wenn die Raddrehzahldifferenzen der Räder einer Achse größer als ein vorgegebener Grenzwert sind, die zeitliche Veränderung der Raddrehzahldifferenzen zwischen den Rädern einer Achse kleiner als ein vorgegebener Grenzwert ist, und die Differenz zwischen den Raddrehzahldifferenzen der einzelnen Achsen kleiner als ein vorgegebener Grenzwert ist.

Treten Raddrehzahldifferenzen durch unterschiedliche Reibbeiwerte an den einzelnen Rädern auf, so führt ein derartiger Fall aufgrund der Abfrage der zeitlichen Veränderung der Raddrehzahldifferenzen und der Differenz der Raddrehzahldifferenzen der einzelnen Achsen nicht zu einer Kurvenerkennung. Die Grenzwerte können entsprechend niedrig gewählt werden, ohne daß eine Gefahr einer irrtümlichen Kurvenerkennung besteht, so daß auch Kurven mit großen Radien und bei hohen Geschwindigkeiten erkannt werden können.

Weiterhin wird vorgeschlagen, die von der Sensoreinrichtung ermittelten und von der Auswerteeinheit ausgewerteten Raddrehzahlen zwischenzuspeichern und die Verminderung des Bremsdruckes an dem kurveninneren Rad oder die Erhöhung des Bremsdruckes an dem kurvenäußeren Rad nur dann vorzunehmen, wenn die bei Bremsbeginn zuletzt gespeicherten Daten sowie die momentanen, ermittelten und ausgewerteten Daten auf eine Kurvenfahrt schließen lassen.

Auch bei plötzlich auftretendem µ-Split oder Glatteis und dadurch verursachten Raddrehzahldifferenzen wird durch die Abfrage der zeitlichen Veränderung der Raddrehzahldifferenz eine Geradeausfahrt sicher von einer Kurvenfahrt unterschieden, da die zeitliche Veränderung der Raddrehzahldifferenzen bei µ-Split erheblich größer als bei einer Kurvenfahrt ist. Eine zusätzliche Sicherheit gegen das fehlerhafte Erkennen einer Kurvenfahrt wird durch die Abfrage der bei Bremsbeginn zuletzt zwischengespeicherten Raddrehzahlen bzw. deren Differenzen geschaffen. Dies ist insbesondere von Vorteil, da ein fehlerhaftes Erkennen einer Kurvenfahrt bei Geradeausfahrt, verursacht durch µ-Split oder Glatteis, und eine Verminderung des Bremsdruckes infolgedessen, das Wegdrehen des Fahrzeuges unterstützen würde.

Das Vorliegen einer Kurvenfahrt wird somit nur dann bejaht, wenn die von der Sensoreinrichtung zu unterschiedlichen Zeitpunkten ermittelten Daten, nämlich die zuletzt vor dem Bremsbeginn ermittelten, von der Auswerteeinheit ausgewerteten und in der Speichereinheit abgelegten Daten, und die momentan ermittelten Daten, eine Kurvenfahrt erkennen lassen. Dabei wird davon ausgegangen, daß bei ähnlich großen Reibbeiwerten zwischen Fahrbahn und den einzelnen Rädern die zeitliche Änderung der Raddrehzahldifferenzen begrenzt ist und eine Kurvenfahrt nur dann vorliegt, wenn die Raddrehzahldifferenzen zweier aufeinanderfolgender Meßzyklen eine Kurvenfahrt erkennen lassen. Die Wahl des Zeitabstandes der Meßzyklen wird Zweckmäßigerweise im Rahmen eines Optimierungsverfahrens vorgenommen und liegt zwischen 0,1 s und 1 s. Durch dieses Verfahren wird eine zusätzliche Sicherheit gegen das fehlerhafte Erkennen einer Kurvenfahrt bei plötzlich auftretenden Raddrehzahldifferenzen bedingt durch unterschiedliche Reibbeiwerte zwischen der Fahrbahn und den einzelnen Rädern und Geradeausfahrt geschaffen.

Weiterhin können die Grenzwerte durch die erfindungsgemäße Kurvenerkennung entsprechend niedrig gewählt werden, ohne daß bei Vorliegen von µ-Split die Gefahr einer irrtümlichen Kurvenerkennung auch bei Geradeausfahrt besteht. Mit der erfindungsgemäßen Lösung kann durch die Wahl von niedrigeren Grenzwerten auch bei hohen Geschwindigkeiten und/oder großen Kurvenradien, d. h. bei sehr geringen Raddrehzahldifferenzen einer Achse eine Kurvenfahrt sicher erkannt werden.

Im folgenden wird die Erfindung anhand eines Ausführungsbeispieles näher erläutert. Die Zeichnungen zeigen:
- Figur 1: Kraftfahrzeug schematisch während einer Kurvenfahrt;
- Figur 2: Kraftfahrzeug schematisch mit Raddrehzahlsensoren.

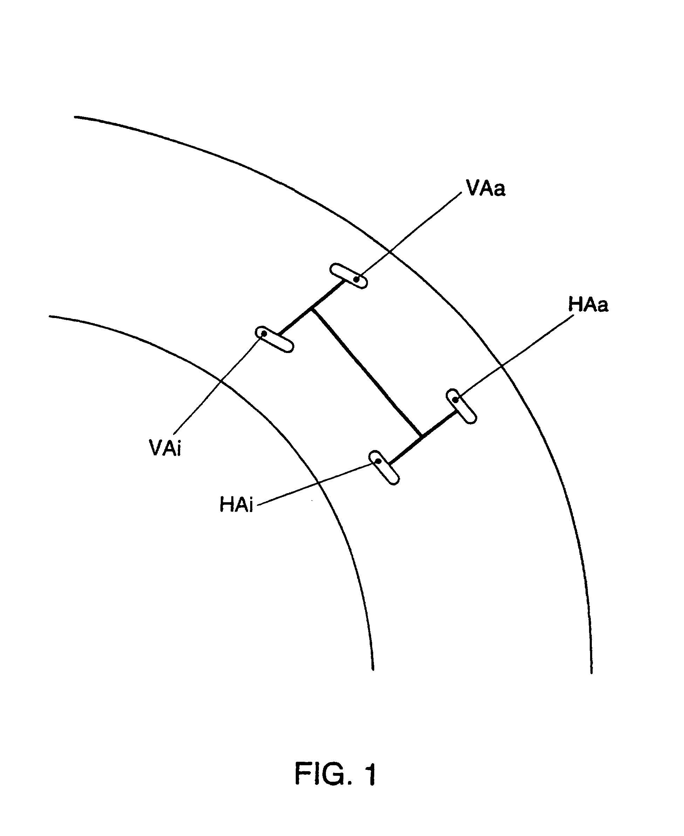

Figur 1 zeigt schematisch ein Kraftfahrzeug, das eine Linkskurve befährt. Hierbei ist das vordere, kurveninnere Rad VAᵢ das linke Vorderrad. Entsprechend wäre bei einer Rechtskurve das vordere, kurveninnere Rad das rechte Vorderrad. Im dargestellten Beispiel einer Linkskurve ist das hintere, kurveninnere Rad HAᵢ das linke Hinterrad. Das vordere, kurvenäußere Rad VAₐ und das hintere, kurvenäußere Rad HAₐ sind die jeweils rechten Räder der Vorder- und Hinterachse.

Betätigt der Fahrzeugführer in einem Kraftfahrzeug, in der in Figur 1 dargestellten Fahrsituation die Bremse, und werden von einer Sensorvorrichtung Daten ermittelt, die auf eine Kurvenfahrt schließen lassen, so wird der Bremsdruck an zumindest einem kurveninneren Rad vermindert. Alternativ dazu wäre auch eine entsprechende Bremsdruckerhöhung an einem kurvenäußeren Rad denkbar. Maßgebend ist nur, daß an dem kurveninneren Rad geringere Bremskräfte wirken als an dem kurvenäußeren Rad. Durch diese Maßnahme wird der Tendenz zum Übersteuern bei Bremsbetätigung, insbesondere bei leichten Abbremsen gekennzeichnet durch einen vorgegebenen Grenzwert, während einer Kurvenfahrt entgegengewirkt.

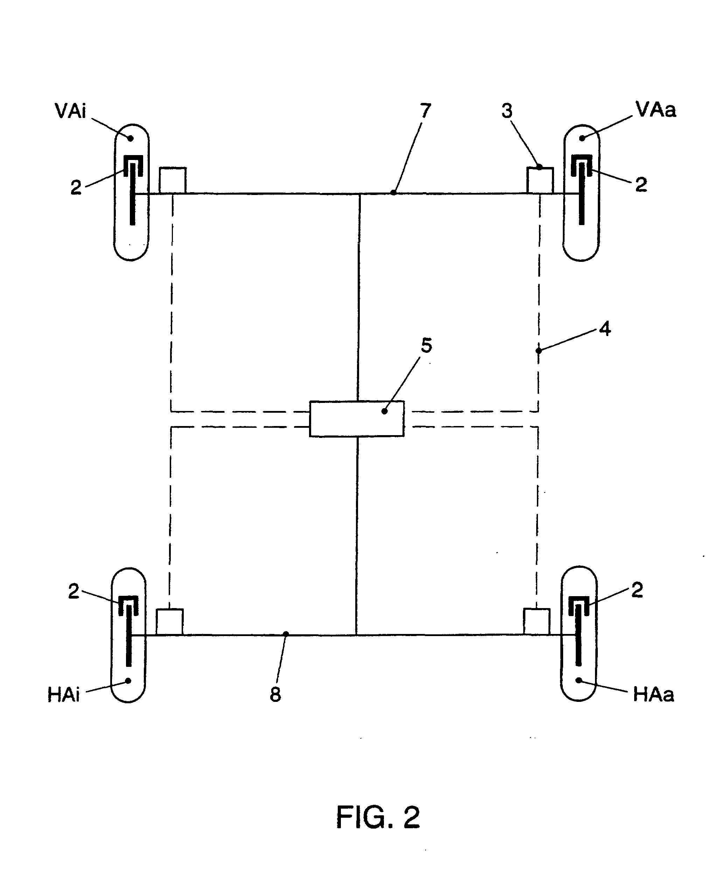

In Figur 2 ist schematisch ein Kraftfahrzeug 1 zu erkennen. Den einzelnen Rädern VAᵢ; VAₐ; HAᵢ; HAₐ der Vorderachse 7 und der Hinterachse 8 sind die Sensorvorrichtungen 3, wie z. B. Raddrehzahlsensoren zugeordnet. Die Signale der Raddrehzahlsensoren 3 werden über die Signalleitungen 4 einer Auswerteeinheit 5 mit darin angeordneter Speichereinheit zugeleitet.

Die Signale der Raddrehzahlsensoren 3 werden in der, der Auswerteeinheit 5 zugeordneten Speichereinheit in regelmäßigen Zeitabständen zwischengespeichert. Die Wahl der Zeitabstände wird zweckmäßigerweise im Rahmen eines Optimierungsverfahrens vorgenommen und liegt zwischen 0,1s und 1s. Wird durch die zuletzt in der Speichereinheit abgelegten Daten eine Kurvenfahrt erkannt und gleichzeitig durch die momentanen von der Sensorvorrichtung ermittelten Daten eine Kurvenfahrt erkannt, so wird das Vorliegen einer Kurve bejaht und bei Betätigung der Bremse, der Bremsdruck an zumindest einer Bremszange 2 eines kurveninneren Rades unabhängig von der Blockierneigung der Räder vermindert. Dabei ist insbesondere leichtes Abbremsen, gekennzeichnet durch einen vorgegebenen Grenzwert, gemeint.

Eine Kurvenfahrt wird erkannt, wenn die in der Auswerteeinheit 5 ausgewerteten Raddrehzahlen Raddrehzahldifferenzen zwischen den Rädern einer Achse 7; 8 ergeben, die oberhalb eines Grenzwertes liegen, und wenn die zeitliche Veränderung der Raddrehzahldifferenzen zwischen den Rädern einer Achse 7; 8 kleiner als ein vorgegebener Grenzwert und die Differenz zwischen den Raddrehzahldifferenzen der einzelnen Achsen 7; 8 kleiner als ein vorgegebener Grenzwert ist.

## Patentansprüche

1. Verfahren zur Bremsdruckregelung an den Rädern zumindest einer Achse eines Kraftfahrzeuges, wobei die Raddrehzahlen von mindestens einer Sensorvorrichtung (3) ermittelt und einer Auswerteeinheit (5) zugeleitet werden, welche die Raddrehzahlen auswertet und aus den ausgewerteten Raddrehzahlen Stellsignale für Aktuatoren zur Einstellung des Radbremsdruckes an den einzelnen Rädern bildet, wobei in Abhängigkeit von den ermittelten und ausgewerteten Raddrehzahlen eine Verminderung des Bremsdruckes an mindestens einem kurveninneren Rad oder eine Erhöhung des Bremsdruckes an mindestens einem kurvenäußeren Rad bei Kurvenfahrt und gleichzeitiger Bremsbetätigung vorgenommen wird, **dadurch gekennzeichnet, daß** eine Kurve erkannt wird, wenn die Raddrehzahldifferenzen der Räder (VAᵢ; VAₐ; HAᵢ; HAₐ) einer Achse (7; 8) größer als ein vorgegebener Grenzwert sind, und wenn die zeitliche Veränderung der Raddrehzahldifferenzen der Räder (VAᵢ; VAₐ; HAᵢ; HAₐ) einer Achse (7; 8) kleiner als ein vorgegebener Grenzwert ist, und die Differenz zwischen den Raddrehzahldifferenzen der Räder (VAᵢ; VAₐ; HAᵢ; HAₐ) der einzelnen Achsen (7; 8) kleiner als ein vorgegebener Grenzwert ist.

2. Verfahren nach Anspruch 1, **dadurch gekennzeichnet, daß** die von der Sensorvorrichtung (3) ermittelten und von der Auswerteeinheit (5) ausgewerteten Raddrehzahlen in einem Speicher zwischengespeichert werden, und das die Verminderung des Bremsdruckes an dem kurveninneren Rad (VAᵢ; HAᵢ) oder die Erhöhung des Bremsdruckes an dem kurvenäußeren Rad (VAₐ; HAₐ) vorgenommen wird, wenn durch die bei Bremsbeginn zuletzt ausgewerteten und gespeicherten Raddrehzahldifferenzen und durch die momentanen von der Sensorvorrichtung (3) ermittelten und von der Auswerteeinheit (5) ausgewerteten Raddrehzahldifferenzen eine Kurvenfahrt erkannt werden.

3. Vorrichtung zur Bremsdruckregelung an den Rädern zumindest einer Achse eines Kraftfahrzeuges, wobei die Raddrehzahlen von mindestens einer Sensorvorrichtung (3) ermittelbar und einer Auswerteeinheit (5) zuleitbar sind, welche die Raddrehzahlen auswertet und aus den ausgewerteten Raddrehzahlen Stellsignale für Aktuatoren zur Einstellung des Radbremsdruckes an den einzelnen Rädern bildet, wobei in Abhängigkeit von den ermittelten und ausgewerteten Raddrehzahlen eine Verminderung des Bremsdruckes an mindestens einem kurveninneren Rad oder eine Erhöhung des Bremsdruckes an mindestens einem kurvenäußeren Rad bei Kurvenerkennung und bei gleichzeitiger Bremsbetätigung vornehmbar ist, **dadurch gekennzeichnet, daß** das Vorliegen einer Kurvenfahrt dadurch erkennbar ist, wenn die Raddrehzahldifferenz der Räder (VAᵢ; VAₐ; HAᵢ; HAₐ) zumindest einer Achse (7; 8) größer als ein vorgegebener Grenzwert ist, und die zeitliche Veränderung der Raddrehzahldifferenzen zwischen den Rädern (VAᵢ; VAₐ; HAᵢ; HAₐ) einer Achse (7; 8) kleiner als ein vorgegebener Grenzwert ist, und die Differenz zwischen den Raddrehzahldifferenzen der einzelnen Achsen kleiner als ein vorgegebener Grenzwert ist.

4. Vorrichtung nach Anspruch 3, **dadurch gekennzeichnet, daß** die von der Sensorvorrichtung (3) ermittelten und von der Auswerteeinheit (5) ausgewerteten Raddrehzahlen in einem Speicher zwischenspeicherbar sind, und das die Verminderung des Bremsdruckes an dem kurveninneren Rad (VAᵢ; HAᵢ) oder die Erhöhung des Bremsdruckes an dem kurvenäußeren Rad (VAₐ; HAₐ) vomehmbar ist, wenn durch die bei Bremsbeginn zuletzt ausgewerteten und gespeicherten Raddrehzahldifferenzen und durch die momentanen von der Sensorvorrichtung (3) ermittelten und von der Auswerteeinheit (5) ausgewerteten Raddrehzahldifferenzen eine Kurvenfahrt erkennbar sind.

## Claims

1. Method for controlling brake pressure at the wheels of at least one axle of a motor vehicle, the wheel speeds being determined by at least one sensor device (3) and fed to an evaluation unit (5) which evaluates the wheel speeds and from the evaluated wheel speeds forms actuation signals for actuators for setting the wheel brake pressure at the individual wheels, the brake pressure at at least one wheel on the inside of a bend being decreased or the brake pressure at at least one wheel on the outside of a bend being increased as a function of the determined and evaluated wheel speeds when cornering and simultaneous actuation of the brakes take place, **characterized in that** a bend is detected if the wheel speed differences of the wheels (VAⱼ; VAₐ; HAⱼ; HAₐ) of an axle (7; 8) are greater than a predefined limiting value and if the change in the wheel speed differences of the wheels (VAⱼ; VAₐ; HAⱼ; HAₐ) of an axle (7; 8) over time is smaller than a predefined limiting value, and the difference between the wheel speed differences of the wheels (VAⱼ; VAₐ; HAⱼ; HAₐ) of the individual axles (7; 8) is smaller than a predefined limiting value.

2. Method according to Claim 1, **characterized in that** the wheel speeds which are determined by the sensor device (3) and evaluated by the evaluation unit (5) are buffered in a memory, and that the brake pressure at the wheel (VAⱼ; HAⱼ) on the inside of a bend is decreased or the brake pressure at the wheel (VAₐ; HAₐ) on the outside of a bend is increased if cornering is detected by means of the wheel speed differences last evaluated and stored when braking starts and by means of the instantaneous wheel speed differences which are determined by the sensor device (3) and evaluated by the evaluation unit (5).

3. Device for controlling brake pressure at the wheels of at least one axle of a motor vehicle, it being possible for the wheel speeds to be determined by at least one sensor device (3) and to be fed to an evaluation unit (5) which evaluates the wheel speeds and from the evaluated wheel speeds forms actuation signals for actuators for setting the wheel brake pressure at the individual wheels, it being possible to decrease the brake pressure at at least one wheel on the inside of a bend or increase the brake pressure at at least one wheel on the outside of a bend as a function of the determined and evaluated wheel speeds when cornering is detected and when there is simultaneous activation of the brakes, **characterized in that** the occurrence of cornering can be detected if the wheel speed difference of the wheels (VAⱼ; VAₐ; HAⱼ; HAₐ) of at least one axle (7; 8) is greater than a predefined limiting value, and the change in the wheel speed differences between the wheels (VAⱼ; VAₐ; HAⱼ; HAₐ) of an axle (7; 8) over time is smaller than a predefined limiting value and the difference between the wheel speed differences of the individual axles is smaller than a predefined limiting value.

4. Device according to Claim 3, **characterized in that** the wheel speeds which are determined by the sensor device (3) and evaluated by the evaluation unit (5) can be buffered in a memory, and **in that** the brake pressure at the wheel (VAⱼ; HAⱼ) on the inside of a bend can be decreased or the brake pressure at the wheel (VAₐ; HAₐ) on the outside of a bend can be increased if cornering can be detected by means of the wheel speed differences last evaluated and stored at the start of braking and by means of the instantaneous wheel speed differences which are determined by the sensor device (3) and evaluated by the evaluation unit (5).

## Revendications

1. Procédé pour le réglage de la pression de freinage sur les roues d'au moins un essieu d'un véhicule automobile, les régimes de roue étant calculés par au moins un dispositif capteur (3) et envoyés à une unité d'analyse (5), laquelle analyse les régimes de roue et forme à partir des régimes de roue analysés des signaux de commande pour des actionneurs pour le réglage de la pression de freinage de roue sur les roues individuelles, moyennant quoi on procède en fonction des régimes de roue calculés et analysés à une réduction de la pression de freinage sur au moins une roue intérieure au virage ou une augmentation de la pression de freinage sur au moins une roue extérieure au virage avec un parcours en virage et une commande de frein simultanée, **caractérisé en ce qu'**un virage est détecté lorsque les différences de régime des roues (VAᵢ ; VAₐ ; HAᵢ ; HAₐ) d'un essieu (7 ; 8) sont supérieures à une valeur limite prédéfinie et lorsque la variation dans le temps des différences de régime des roues (VAᵢ ; VAₐ ; HAᵢ ; HAₐ) d'un essieu (7 ; 8) est inférieure à une valeur limite prédéfinie, et la différence entre les différences de régime des roues (VAᵢ ; VAₐ ; HAᵢ ; HAₐ) des essieux (7 ; 8) individuels est inférieure à une valeur limite prédéfinie.

2. Procédé selon la revendication 1, **caractérisé en ce que** les régimes de roue déterminés par le dispositif capteur (3) et analysés par l'unité d'analyse (5) sont stockés provisoirement dans une mémoire, et **en ce que** la réduction de la pression de freinage sur la roue intérieure au virage (VAᵢ ; HAᵢ) ou l'augmentation de la pression de freinage sur la roue extérieure au virage (VAₐ ; HAₐ) est effectuée lorsqu'un parcours en virage est détecté par les différences de régime de roue analysées et mémorisées en dernier au début du freinage et par les différences de régime de roue déterminées momentanément par le dispositif capteur (3) et analysées par l'unité d'analyse (5).

3. Dispositif pour le réglage de la pression de freinage sur les roues d'au moins un essieu d'un véhicule automobile, les régimes de roue pouvant être déterminés par au moins un dispositif capteur (3) et amenés à une unité d'analyse (5), laquelle analyse les régimes de roue et forme à partir des régimes de roue analysés des signaux de commande pour des actionneurs pour le réglage de la pression de freinage de roue sur les roues individuelles, moyennant quoi on peut procéder en fonction des régimes de roue calculés et analysés à une réduction de la pression de freinage sur au moins une roue intérieure au virage ou une augmentation de la pression de freinage sur au moins une roue extérieure au virage avec une détection de virage et avec une commande de frein simultanée, **caractérisé en ce que** la présence d'un parcours en virage peut être détectée par le fait que, lorsque la différence de régime des roues (VAᵢ ; VAₐ ; HAᵢ ; HAₐ) d'au moins un essieu (7 ; 8) est supérieure à une valeur limite prédéfinie, et la variation dans le temps des différences de régime de roue entre les roues (VAᵢ ; VAₐ ; HAᵢ ; HAₐ) d'un essieu (7 ; 8) est inférieure à une valeur limite prédéfinie, et la différence entre les différences de régime de roue des essieux individuels est inférieure à une valeur limite prédéfinie.

4. Dispositif selon la revendication 3, **caractérisé en ce que** les régimes de roue calculés par le dispositif capteur (3) et analysés par l'unité d'analyse (5) sont stockés provisoirement dans une mémoire, et **en ce que** la réduction de la pression de freinage sur la roue intérieure au virage (VAᵢ ; HAᵢ) ou l'augmentation de la pression de freinage sur la roue extérieure au virage (VAₐ ; HAₐ) peut être effectuée lorsqu'un parcours en virage peut être détecté par les différences de régime de roue analysées et mémorisées en dernier au début du freinage et par les différences de régime de roue momentanées calculées par le dispositif capteur (3) et analysées par l'unité d'analyse (5).
